# EUROPÄISCHE PATENTANMELDUNG

(11) **EP 0 757 314 A1**
(43) Veröffentlichungstag der Anmeldung: **05.02.1997**
(21) Anmeldenummer: 96111765.2
(22) Anmeldetag: 22.07.1996
(51) Int. Cl.: G06F 9/45

(54) **Verfahren zum Modifizieren der Softwareprozeduren eines Kommunikationssystems**

(30) Priorität: 28.07.1995 DE 19527808
(71) Anmelder: SIEMENS AKTIENGESELLSCHAFT, 80333 München (DE)
(72) Erfinder: Portch, Geoffrey, 81476 München (DE); Hollwedel, Jörg, Dipl.-Ing., 82061 Neuried (DE); Peifer, Jürgen, 81379 München (DE); Grzegorek, Margrit, Dipl.-Ing., 81373 München (DE); Leidreiter, Carsten, Dipl.-Math., 81475 München (DE); Wokittel, Birgitta, Dipl.-Inf., 81541 München (DE)

(57) **Zusammenfassung**

Verfahren zum Einfügen von Änderungen in die Softwareprozeduren von Kommunikationssystemen, mit Patches, die in einer höheren Programmiersprache codiert werden, und
mit wenigstens einem Übersetzungsprogramm (COMP), das gegebenenfalls in einer Mehrzahl von Übersetzungsvorgängen Quellenmodule (M_{G},M_{R}) übersetzt und die Ergebnisse in gegebenenfalls sich unterscheidende Dateien (M_{A},M_{B},M_{C}, SPU₁...SPUₘ,P_{A},P_{B},P_{C}) ablegt
dadurch gekennzeichnet,
daß unter der Steuerung eines übergeordneten Steuerprogramms (DVPATCH)
- die Einfügungen der Änderungen in einem ersten Programm (EDIT) vorgenommen werden, indem wenigstens einer der Patches in dem in Frage kommenden Quellenmodul (M_{G},M_{R}) eingefügt wird,
- ein zweites Programm (CHILLCHAIN) für den Übersetzungsvorgang relevante Informationen liefert,
- das wenigstens eine Übersetzungsprogramm (COMP) die Übersetzung dieses Quellenmoduls (M_{G},M_{R}) nach Maßgabe eines Kriteriums vornimmt,
- die so erzeugten Patches in einem bestimmten Format in den sich gegebenenfalls unterscheidenden Dateien (P_{A},P_{B}, P_{C}) abgelegt werden, und
- ein Bindeprogramm (SSG) die in diesen Dateien gespeicherten Patches zusammenfaßt und physikalisch aufbereitet.

## Beschreibung

Die Erfindung betrifft ein Verfahren gemäß dem Oberbegriff des Patentanspruchs 1.

An moderne Kommunikationssysteme wird neben einer hohen Verarbeitungsgeschwindigkeit insbesondere der Anspruch gestellt, jederzeit für alle Teilnehmer verfügbar zu sein. Dies hat die Konsequenz, daß beispielsweise ein Kommunikationssystem zur Behebung von Softwarefehlern nicht abgeschaltet werden kann, wie dies bei anderen Datenverarbeitungsanlagen der Fall ist. Aus diesem Grunde wurden Verfahren entwickelt, die ein schnelles kurzfristiges Einbringen kleinerer Änderungen in die Softwareprozeduren des Kommunikationssystems ermöglichen. Mit diesen sogenannten Patches lassen sich kleinere Softwareänderungen schnell und effizient einbringen.

Bei einfacheren logischen Codierungsfehlern wird dabei der fehlerhafte Code einfach überschrieben. Falls jedoch darüberhinaus im Programmablauf zusätzlicher Code eingefügt werden muß, wird der eingebrachte Patch mit einem sogenannten 'Rucksack' verbunden. Dieser enthält jenen zusätzlichen Programmcode, der zur Behebung des logischen Fehlers notwendig ist. Die Korrektur des nun geänderten Programmcodes macht sich beim späteren Ablauf dahingehend bemerkbar, daß die Prozedur an der entsprechenden Änderungsstelle zu dem eingebrachten Rucksack verzweigt und nach Abarbeitung desselben ein Rücksprung zum ursprünglichen Programmcode erfolgt. Gesteuert wird dieser Vorgang über eine zugeordnete Patch-Verwaltung, die als Datenbibliothek realisiert ist. Darin sind in Tabellenform die Adressen der den Patches zugeordneten Rücksäcken abgelegt.

Aus der europäischen Patentanmeldung EP 0 492 251 ist ein Verfahren zum kurzfristigen Einbringen von Fehlerkorrekturen in die Softwareprozeduren eines Kommunikationssystemes bekannt. Darin ist offenbart, wie ein Patch von hochprioren Patchprozessen unter exclusiver Reservierung der betreffenden Prozessoren eingebracht wird. Wie Patches in Softwarestrukturen mit Schablonenmodulen (generic modules) oder mit häufig verwendeten Modulen (reusable modules) eingebracht werden, wird hier allerdings nicht angesprochen.

Der Erfindung liegt die Aufgabe zugrunde ein Verfahren anzugeben, mit dem auch moderne Softwarestrukturen gepatcht werden können.

Die Aufgabe wird erfindungsgemäß durch die im Kennzeichen des Patentanspruchs 1 angegebenen Merkmale gelöst.

Wesentlich für die Erfindung ist das Einbringen der Patches in lediglich einem Quellenmodul in einer höheren Programmiersprache. Nach dem in einem ersten Programm erfolgten Editiervorgang wird ein weiteres Programm aufgerufen, das Informationen über den Übersetzungsvorgang liefert. Im Anschluß daran wird der eigentliche Übersetzungsvorgang durch ein Übersetzungsprogramm gestartet. In der Regel müssen mehrere Übersetzungsläufe vorgenommen werden, wobei die Anzahl der Übersetzungsläufe beispielsweise von der Anzahl der Datenmodule abhängt. Die Patches werden dann in Dateien abgelegt und über ein Bindeprogramm wieder zu einem Patch zusammengebunden. Anschließend erfolgt ein Umsetzen in Online-Code. Dieser wird dann in die betreffenden Softwareprozeduren eingebracht.Diese Vorgänge werden von einem übergeordneten Steuerprogramm gesteuert.

Weitere Ausgestaltungen der Erfindung sind in den Unteransprüchen angegeben:

Gemäß Anspruch 2 ist vorgesehen, daß der Quellenmodul ein Schablonenmodul mit einem codierten Algorithmus und wenigstens einem Datenfeld ist, und zusammen mit einer Mehrzahl von Datenmodulen als Eingangsgröße des wenigstens einen Übersetzungsprogrammes dient. Damit ist der Vorteil verbunden, daß Code-Modifizierungen in Softwarestrukturen eingebracht werden können, die Schablonenmodule aufweisen.

Gemäß Anspruch 3 ist vorgesehen,daß eine übergeordnete Struktur durch eine Mehrzahl von Modulen definiert wird und der Quellenmodul die Eigenschaft hat, gleichermaßen in mehreren dieser übergeordneten Strukturen vorhanden zu sein. Damit ist der Vorteil verbunden, daß Code-Modifizierungen in Softwarestrukturen eingebracht werden können, die reusable Module aufweisen.

Gemäß Anspruch 4 ist vorgesehen, daß das wenigstens eine Kriterium durch die Anzahl der Datenmodule definiert wird. Damit werden automatisch soviele Übersetzungsvorgänge gestartet,wie Datenmodule vorhanden sind.

Gemäß Anspruch 5 ist vorgesehen, daß das wenigstens eine Kriterium durch die Anzahl der übergeordneten Strukturen definiert wird, in denen der Quellenmodul gleichermaßen vorhanden ist.Damit werden automatisch soviele Übersetzungsvorgänge gestartet, wie Strukuren mit den oben genannten Eigenschaften vorhanden sind.

Gemäß Anspruch 6 ist vorgesehen, daß das bestimmte Format aus den in ASCII-Format abgelegten Patches sowie Kommandobefehlen für das physikalische Einbringen der Patches in dieProzeduren des Kommunikationssystems gebildet ist.

Gemäß Anspruch 7 ist vorgesehen, daß das erste Programm ein Editorprogramm ist. Damit ist der Vorteil verbunden, daß die Patches in einer höheren Programmiersprache eingefügt werden können.

Gemäß Anspruch 8 ist vorgesehen, daß die Informationen, die das zweite Programm liefert, Informationen über Querbeziehungen der Module, über die Versionsnummer der Software des Kommunikationssystems sowie darüber, in welchem der Quellenmodule die Patches eingebracht worden sind. Damit ist der Vorteil verbunden, daß diese Informationen automatisch vor dem Übersetzungsvorgang zur Verfügung stehen.

Gemäß Anspruch 9 ist vorgesehen, daß die Patches in einer Bibliothek verwaltet werden und beim Einfügen eines Patches die betreffende Bibliothek mit den hierzu relevanten Daten aktualisiert wird. Damit ist der Vorteil verbunden, daß jederzeit ein Abbild der in der Kommunikationssoftware vorhanden Patches gespeichert ist.

Die Erfindung wird im folgenden anhand eines Ausführungsbeispiels näher erläutert.

Es zeigen
- FIG 1: das erfindungsgemäße Verfahren,
- FIG 2: Schablonenmodule, wie sie in Kommunikationssystemen zur Anwendung gelangen,
- FIG 3: Reusable Module, wie sie in Kommunikationssystemen zur Anwendung gelangen.

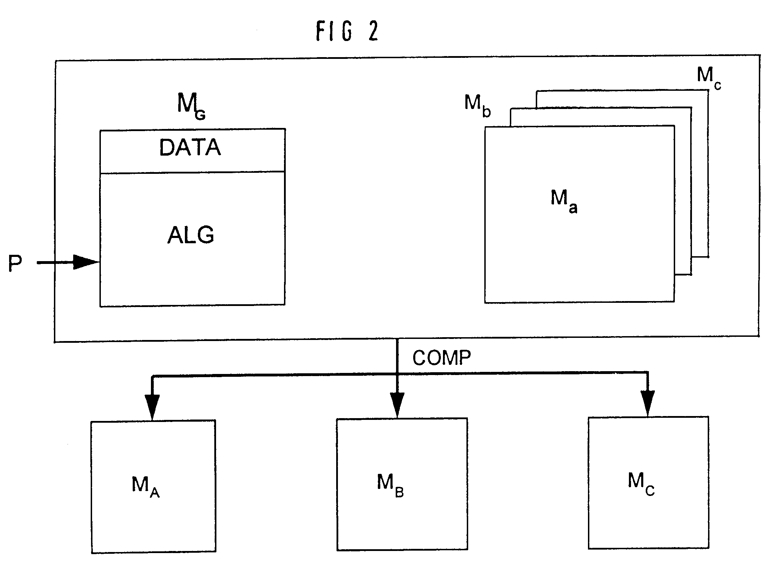

In FIG 2 sind Schablonenmodule M_{G}, auch Generic Modules genannt, offenbart. Sie weisen ein Datenfeld DATA sowie ein Codierungsfeld ALG auf, in dem der eigentliche Algorithmus codiert ist. Weiterhin sind Datenmodule Mₐ, M_{b} sowie M_{c} vorgesehen, in denen der Datentyp definiert ist.Charakteristisch für diese Software ist, daß Algorithmus und Daten organisatorisch getrennt geführt werden. Im Ausführungsbeispiel soll davon ausgegangen werden, daß im Datenmodul Mₐ Daten vom Datentyp INTEGER verwalten werden. Weiterhin wird davon ausgegangen, daß im Datenmodul M_{b} Daten vom Datentyp BOOLEAN und im Datenmodul M_{c} komplexere Strukturen, wie Daten vom Datentyp ARRAY verwaltet werden.

Der Schablonenmodul M_{G} sowie die Datenmodule Mₐ, M_{b}, M_{c} werden nun einem Übersetzungsprogramm COMP zugeführt. Hierzu wird zunächst in einem ersten Übersetzungslauf der Schablonenmodul M_{G} zusammen mit dem Datenmodul Mₐ geladen, übersetzt und eine Datei M_{A} erzeugt, in dem das Übersetzungsergebnis abgelegt wird. Im weiteren wird dann für einen zweiten Übersetzungslauf wird der Schablonenmodul M_{G} zusammen mit dem Datenmodul M_{b} geladen, übersetzt und das Übersetzungsergebnis in einer Datei M_{B} abgelegt. In gleicher Weise wird mit dem Schablonenmodul M_{G} und dem Datenmodul M_{c} verfahren, dessen Übersetzungsergebnis in einer Datei M_{C} abgelegt wird. Damit sind insgesammt drei Übersetzungsläufe von dem Übersetzungsprogramm COMP durchzuführen, wobei jedoch vor dem Übersetzungsvorgang lediglich ein Algorithmusprogramm ALG für die drei unterschiedlichen Datenmodule vorgesehen ist.

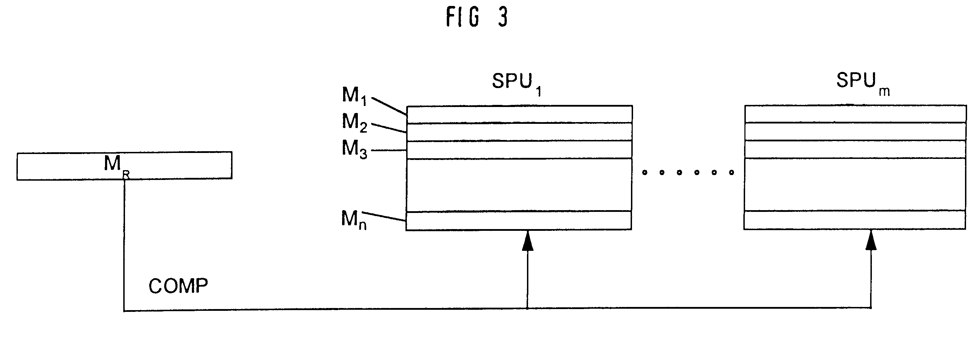

Gemäß FIG 3 ist eine weitere Softwarestruktur, wie sie in Kommunikationssystemen zur Anwendung gelangt, offenbart. Dort sind übergeordnete Strukturen SPU₁...SPUₘ vorgesehen, die lediglich eine Zusammenfassung einer Mehrzahl von Modulen M₁. ..Mₙ darstellen. In der Praxis weisen die Mehrzahl dieser Strukturen SPU₁...SPUₘ den gleichen Modul M_{R} auf. Derartige Module werden auch Reusable Modules genannt.Aus diesem Grund wird der Modul M_{R} in mehreren Übersetzungsläufen in die übergeordneten Strukturen SPU₁...SPUₘ eingefügt. Damit sind auch hier mehrere Übersetzungsläufe notwendig. Der Modul M_{R} wird lediglich einmal codiert und ist damit vor dem Übersetzungsvorgang auch nur einmal vorhanden.

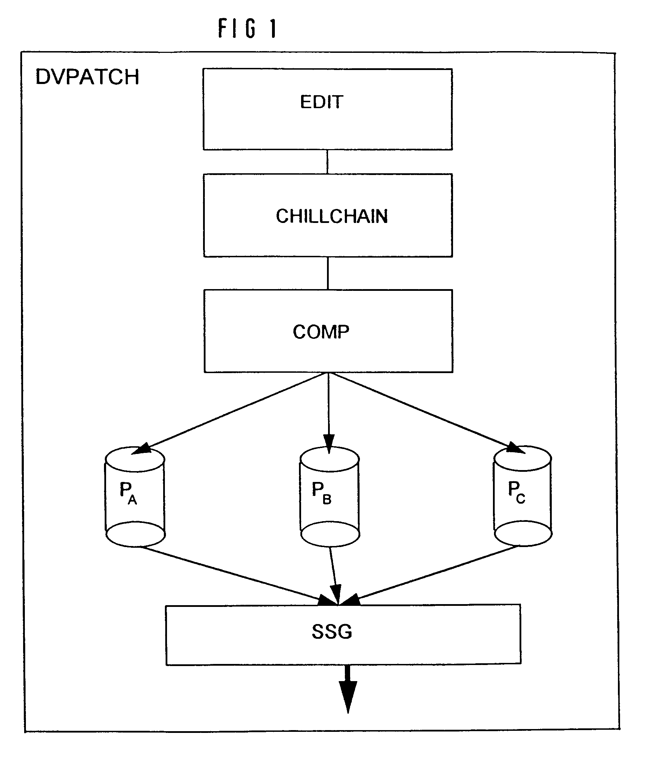

In FIG 1 ist das erfindungsgemäße Verfahren aufgezeigt. Dabei wird davon ausgegangen, daß die beiden soeben beschriebenen Softwarestrukturen gemäß FIG 2 und FIG 3 in ihrem Codierungsablauf modifiziert werden sollen.

Soll ein Schablonenmodul M_{G} modifiziert werden, so wird zunächst ein übergeordneten Steuerprogramms DVPATCH aufgerufen. Dieses steuert den gesammten Ablauf des Einbringens von neuem Code bis zu dem Abspeichern der erzeugten Patches. Unter der Steuerung des übergeordneten Steuerprogramms DVPATCH wird im folgenden ein Editorprogramm EDIT aktiviert, in den der zu modifizierende Modul M_{G} geladen wird. Hier wird nun der betreffende Patch P in die Codierungen des Algorithmus eingefügt. Die Modifizierungen selbst können damit in einer höheren Programmiersprache durchgeführt werden. Dies ist beispielsweise für ein Kommunikationssystem die Programmiersprache CHILL. Ist dieser Prozeß abgeschlossen, wird ein weiteres Programm CHILLCHAIN gestartet. Dieses Programm muß insbesondere dafür Sorge tragen, daß für den Übersetzungsvorgang relevanten Informationen dem Übersetzungsprogramm COMP übergeben werden. So müssen hier zunächst Informationen über Querbeziehungen (GRANT, SEIZE) sowie die Versionsnummer der betreffenden Systemsoftware ermittelt werden. Außerdem muß ermittelt werden, welcher Modul M_{G} modifiziert worden ist. Diese Informationen werden dem Übersetzungsprogramm COMP übergeben.

Unter der Steuerung des übergeordneten SteuerprogrammsDVPATCH wird nun das Übersetzungsprogramm COMP gestartet. Als Eingangsgrößen gelten zunächst der Schablonenmodul M_{G} mit dem ersten Datenmodul Mₐ. Dabei werden beide Module vollständig geladen. Als Übersetzungsergebnis werden dann lediglich die eigebrachten Patche P übersetzt und in der Datei P_{A} abgespeichert. Hier wird der Patch in ASCII-Format abgespeichert.

Weiterhin werden hier noch Kommandobefehle für die ONLINE-Patch-Tools mitabgelegt.

In vorliegendem Ausführungsbeispiel wurde davon ausgegangen, daß insgesammt 3 Datenmodule vorhanden sind. Damit ist auch die Zahl der Übersetzungsläufe vorbestimmt. Somit ist die Anzahl der Übersetzungsläufe abhängig von der Anzahl der Datenmodule Mₐ, M_{b}, M_{c}.Insofern wird das Übersetzungsprogramm COMP noch zweimal gestartet,wobei als Ergebnis auch hier 2 Patches übersetzt und in 2 weiteren Dateien P_{B}, P_{C} abgespeichert werden. Im Anschluß daran wird ein Bindeprogramm SSG gestartet, das die in den Dateien P_{A}, P_{B}, P_{C} abgelegten Patches P wieder zu einer Datei zusammenfügt. Weiterhin muß das Bindeprogramm SSG dafür Sorge tragen, daß die Patches P physikalisch aufbereitet werden. Im Anschluß daran kann der Patch P nun physikalisch unter Benutzung von ONLINE-PATCH-Tools in die Prozeduren des Kommunikationssystems eingefügt werden, die jedoch nicht Gegenstand des Ausführungsbeispiels sind.

In gleicher Weise wird vorgegangen,wenn die Codierungen eines reusable modules M_{R} modifiziert werden sollen. In diesem Fall dient lediglich der Quellenmodul M_{R} als Eingangsgröße für das Übersetzungsprogramm. Die Anzahl der Überseetzungsläufe wird durch die Anzahl der Strukturen SPUₓ bestimmt, in denen der Quellenmodul M_{R} gleichermaßen vorhanden ist.

Die Daten der Patches werden in einer Bibliothek verwaltet. Beim Einfügen eines Patch wird die betreffende Bibliothek mit den entsprechenden Daten aktualisiert. In vorliegendem Ausführungsbeispiel wurd lediglich das Einbringen von Fehlerkorrekturen beschrieben. Die Erfindung ist allerdings nicht darauf beschränkt. Vielmehr besteht die Möglichkeit, generell den Code der Softwareprozeduren zu modifizieren.

In vorliegendem Ausführungsbeispiel wurde das Beheben kleinerer Softwarefehler angesprochen. Die Erfindung ist allerdings nicht darauf beschränkt, derartige Fehler schnell und e effizient zu beseitigen. Mit dem erfindungsgemäßen Verfahren können auch generell die Codierungen verändert oder um zusätzlichen Code erweitert werden. Beispielsweise wäre es möglich, während des Betriebes des Kommunikationssystems unter Anwendung des erfindungsgemäßen Verfahrens eine Prozedur in die Software einzufügen.

## Patentansprüche

1. Verfahren zum Einfügen von Änderungen in die Softwareprozeduren von Kommunikationssystemen, mit
Patches, die in einer höheren Programmiersprache codiert werden, und
mit wenigstens einem Übersetzungsprogramm (COMP), das gegebenenfalls in einer Mehrzahl von Übersetzungsvorgängen Quellenmodule (M_{G}, M_{R}) übersetzt und die Ergebnisse in gegebenenfalls sich unterscheidende Dateien (M_{A}, M_{B}, M_{C}, SPU₁...SPUₘ, P_{A}, P_{B}, P_{C}) ablegt
**dadurch gekennzeichnet,**
daß unter der Steuerung eines übergeordneten Steuerprogramms (DVPATCH)
- die Einfügungen der Änderungen in einem ersten Programm (EDIT) vorgenommen werden, indem wenigstens einer der Patches in dem in Frage kommenden Quellenmodul (M_{G}, M_{R}) eingefügt wird,
- ein zweites Programm (CHILLCHAIN) für den Übersetzungsvorgang relevante Informationen liefert,
- das wenigstens eine Übersetzungsprogramm (COMP) die Übersetzung dieses Quellenmoduls (M_{G}, M_{R}) nach Maßgabe eines Kriteriums vornimmt,
- die so erzeugten Patches in einem bestimmten Format in den sich gegebenenfalls unterscheidenden Dateien (P_{A}, P_{B}, P_{C}) abgelegt werden, und
- ein Bindeprogramm (SSG) die in diesen Dateien gespeicherten Patches zusammenfaßt und physikalisch aufbereitet.

2. Verfahren nach Anspruch 1,
**dadurch gekennzeichnet,**
daß der Quellenmodul (M_{G}) ein Schablonenmodul mit einem codierten Algorithmus und wenigstens einem Datenfeld (DATA) ist und zusammen mit einer Mehrzahl von Datenmodulen (Mₐ, M_{b}, M_{c}) als Eingangsgröße des wenigstens einen Übersetzungsprogrammes (COMP) dient.

3. Verfahren nach Anspruch 1,
**dadurch gekennzeichnet,**
daß eine übergeordnete Struktur (SPUₓ) durch eine Mehrzahl von Modulen (M₁...Mₙ) definiert wird und der Quellenmodul (M_{R}) die Eigenschaft hat, gleichermaßen in mehreren dieser übergeordneten Strukturen (SPU₁...SPUₘ) vorhanden zu sein.

4. Verfahren nach einem der Ansprüche 1 bis 3
**dadurch gekennzeichnet,**
daß das wenigstens eine Kriterium durch die Anzahl der Datenmodule (Mₐ, M_{b}, M_{c}) definiert wird.

5. Verfahren nach Anspruch 3,
**dadurch gekennzeichnet,**
daß das wenigstens eine Kriterium durch die Anzahl der übergeordneten Strukturen (SPU₁...SPUₘ) definiert wird, in denen der Quellenmodul (M_{R}) gleichermaßen vorhanden ist.

6. Verfahren nach einem der vorstehenden Ansprüche,
**dadurch gekennzeichnet,**
daß das bestimmte Format aus den in ASCII-Format abgelegten Patches sowie Kommandobefehlen für das physikalische Einbringen der Patches in die Prozeduren des Kommunikationssystems gebildet ist.

7. Verfahren nach einem der vorstehenden Ansprüche,
**dadurch gekennzeichnet,**
daß das erste Programm (EDIT) ein Editorprogramm ist.

8. Verfahren nach einem der vorstehenden Ansprüche,
**dadurch gekennzeichnet,**
daß die Informationen, die das zweite Programm (CHILLCHAIN) liefert, Informationen über Querbeziehungen der Module, über die Versionsnummer der Software des Kommunikationssystems sowie darüber, in welchem der Quellenmodule (M_{G},M_{R}) die Patches eingebracht worden sind.

9. Verfahren nach einem der vorstehenden Ansprüche,
**dadurch gekennzeichnet,**
daß die Patches in einer Bibliothek verwaltet werden und beim Einfügen eines Patches die betreffende Bibliothek mit den hierzu relevanten Daten aktualisiert wird.
